# EUROPÄISCHE PATENTSCHRIFT

(11) **EP 1 780 114 B1**
(45) Veröffentlichungstag und Bekanntmachung des Hinweises auf die Patenterteilung: **15.09.2010**
(21) Anmeldenummer: 06021375.8
(22) Anmeldetag: 12.10.2006
(51) Int. Cl.: B62M 9/12

(54) **Vorderer Kettenumwerfer**
Front derailleur
Dérailleur avant

(30) Priorität: 25.10.2005 DE 102005050988
(43) Veröffentlichungstag der Anmeldung: 02.05.2007
(73) Patentinhaber: SRAM Deutschland GmbH, 97404 Schweinfurt (DE)
(72) Erfinder: Florczyk, Raymond, 97525 Schwebheim (DE)

(56) Entgegenhaltungen:
- EP-A- 0 875 445
- EP-A- 1 031 504
- EP-A- 1 040 991
- EP-A- 1 040 992
- EP-A- 1 147 978
- EP-A- 1 314 636
- EP-A- 1 433 696
- DE-A1- 2 127 880
- DE-A1- 2 949 377
- DE-A1- 3 429 276
- DE-U- 1 782 592
- DE-U1- 20 009 533
- DE-U1- 20 117 994
- GB-A- 920 185
- US-A- 4 279 605
- US-A- 4 486 182
- US-A- 4 586 913
- US-A1- 2004 185 975

## Beschreibung

Die vorliegende Erfindung betrifft einen vorderen Kettenumwerfer, gemäß dem Oberbegriff von Anspruch 1.

Das tragende Element des Kettenumwerfers ist das Gehäuseteil, an dem zur Befestigung am Fahrrad ein Rohrschellenteil angelenkt ist und zum Umwerfen der Kette auf verschiedene Kettenblätter eine Kettenführung mittels einer Viergelenkmechanik beweglich angeordnet ist. Die Schaltbewegung wird über ein Drehteil, an dem ein Seilzug angreift, in die Viergelenkmechanik eingeleitet.

In der EP 1 314 636 A2 wird ein vorderer Kettenumwerfer gezeigt. Er besteht im Wesentlichen aus einem festen Bauteil mit einer schwenkbaren Rohrschelle und einem beweglichen Umwerferelement, das mittels einer Parallelogrammführung vom festen Bauteil getragen wird. Hierzu befinden sich am festen Bauteil zwei Gelenkpunkte, die eine Schwenkbewegung der beiden Parallelogrammarme ermöglichen. Über einen Seilzug wird die Schaltbewegung in Richtung größeres Kettenblatt an einem Parallelogrammarm eingeleitet. Die Schaltkraft in die andere Richtung wird von einer Rückstellfeder bereitgestellt. Die Schaltkräfte zum Umwerfen der Kette von einem kleinen Kettenblatt auf ein benachbartes größeres sind wesentlich höher als in die andere Richtung. Zudem muss dabei noch die Rückstellfeder aufgezogen werden. Das durch den Seilzug am Umwerfer eingeleitete Drehmoment wird durch das relativ schmale feste Bauteil und die Rohrschelle am Rahmenrohr abgestützt. Dies erfordert ein entsprechend hochwertiges Material für das feste Bauteil und die Rohrschelle und eine straffe Klemmung am Rahmenrohr, wodurch es dort gelegentlich zur Oberflächenbeschädigungen kommt.

Die Dokumente DE 2 127 880 sowie US 2004/0185975 offenbaren Kettenwerfer gemäß dem Oberbegriff von Anspruch 1.

Ausgehend vom Stand der Technik liegt der Erfindung die Aufgabe zugrunde, den vorderen Kettenumwerfer, insbesondere das feste Bauteil so auszubilden, dass eine gute Abstützung des Schaltmomentes am Rahmenrohr ermöglicht wird und ein weniger fester und leichterer Werkstoff eingesetzt werden kann. Wodurch sich sowohl in der Herstellung als auch in der Montage bzw. beim Befestigen des Kettenumwerfers am Rahmenrohr Vorteile ergeben. Des Weiteren soll die Rückstellfeder gegen Verschmutzung gekapselt werden und die Einstellschrauben für die Verstellanschläge der Kettenführung sollen gut zugänglich sein.

Die Aufgabe wird gemäß den kennzeichnenden Merkmalen von Anspruch 1 im Wesentlichen durch ein Umwerfergehäuse, das mit einer in Abstützrichtung über den Scharnierbereich hinausgehende Abstützverlängerung ausgestattet ist, gelöst. Im Abstand zum Scharnier am Umwerfergehäuse befinden sich an der Abstützverlängerung axial fluchtende Gelenkpunkte zum Anlenken eines, die Kettenführung tragendes, Schwenkelementes und parallel dazu die Aufnahme für einen Gelenkbolzen. Um den Gelenkbolzen ist die Rückstellfeder angeordnet, die sich an einem Federanschlag an der Abstützverlängerung abstützt. Um verschiedene Vorspannkräfte der Rückstellfeder erzielen zu können, gibt es noch einen weiteren Federanschlag. Die Rückstellfeder wird von einer integrierten Federabdeckung ganz oder teilweise umschlossen. Die Federabdeckung nimmt die Bohrungen bzw. Verstellgewinde für die, relativ zur Rahmenrohraufnahme geneigten Einstellschrauben auf. Das um den Gelenkbolzen schwenkbare und einen Parallelogrammarm bildende Übertragungselement wird über einen Seilzug, der an einem Hebelansatz angreift und in der Einbaulage nach oben zieht, gegen den Uhrzeigersinn gedreht. Dabei wird die vom Schwenkelement getragene Kettenführung über den Parallelogrammarm in Richtung größeres Kettenblatt bewegt. Beim Schaltvorgang von einem größeren auf ein kleineres Kettenblatt wird das Übertragungselement von der Rückstellfeder im Uhrzeigersinn gedreht. Am Übertragungselement befindet sich noch ein zweiter Hebelansatz, um auch die Anbindung eines nach unten ziehenden Seilzuges zu ermöglichen.

Auf der zum Rahmenrohr gerichteten Seite des Umwerfergehäuses befindet sich das Scharnier für die Rohrschelle sowie das Gewinde bzw. ein Befestigungsmittel, in Form einer Mutter, zum Klemmen des Rahmenrohres. Das mit der Abstützverlängerung ausgestattete Umwerfergehäuse ermöglicht eine optimale Abstützung der Schaltmomente am Rahmenrohr und zeigt ein, gegenüber dem Stand der Technik, verbessertes Klemmverhalten sowie einen erhöhten Verdrehwiderstand am Rahmenrohr.

Das vorgeschlagene Umwerfergehäuse besteht ebenso wie die Rohrschelle aus einem leichten Material, z. B. aus Aluminium und kann als Aluminiumgußteil in einem Fertigungsgang hergestellt werden.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkendes Beispiel anzusehen sind.
- Fig. 1: zeigt eine 3 D-Darstellung des Kettenumwerfers mit Blick auf das Übertragungselement
- Fig. 2: zeigt eine Explosionsdarstellung des Kettenumwerfers
- Fig. 3: zeigt eine 3 D-Darstellung des Kettenumwerfers ohne Übertragungselement und Kettenführung
- Fig. 4: zeigt eine 3 D-Darstellung des Umwerfergehäuses
- Fig. 5: zeigt die Lagerung des Schwenkelementes am Umwerfergehäuse im Schnitt

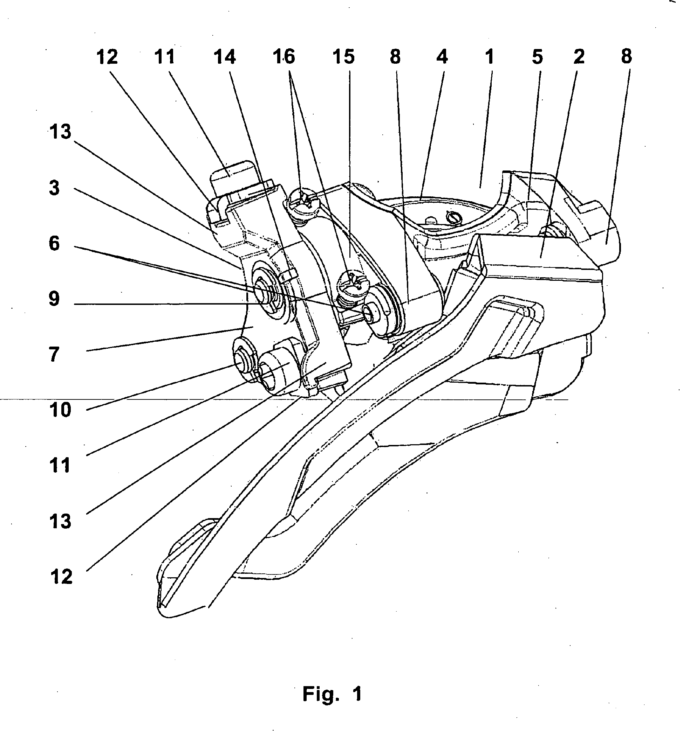

Figur 1 zeigt eine 3 D-Darstellung des vorderen Kettenumwerfers 1 mit der Kettenführung 2, einem Übertragungselement 3, einer Rohrschelle 4 und dem Umwerfergehäuse 5. Am Umwerfergehäuse 5 befinden sich Anlenkpunkte 6 für zwei Parallelogrammarme. Der erste Parallelogrammarm 7 ist im Übertragungselement 3 integriert, während das Schwenkelement den anderen Parallelogrammarm bildet. Am Umwerfergehäuse 5 befinden sich ein Scharnier zur gelenkigen Anbindung der Rohrschelle 4, zwei Gelenkansätze 8 zur Aufnahme des Schwenkelementes und ein dazu parallel verlaufender Gelenkbolzen 9 zur schwenkbaren Aufnahme des Übertragungselementes 3. Der Abstand zwischen dem Gelenkbolzen 9 und dem Anlenkbolzen 10 definiert am Übertragungselement 3 die Länge des Parallelogrammarmes 7. Am Übertragungselement 3 befinden sich zwei, mit jeweils einer Klemmschraube 11 und einem Klemmstück 12 ausgestattete Hebelansätze 13 zur alternativen Befestigung eines nach unten bzw. nach oben ziehenden Zugseiles. Eine Rückstellfeder 14, die das Übertragungselement 3 im Uhrzeigersinn vorspannt, ist um den Gelenkbolzen 9 angeordnet und wird von einer im Umwerfergehäuse 5 integrierten Federabdeckung 15 gegen Verschmutzung geschützt. In der Federabdeckung 15 befinden sich die Gewinde für die Einstellschrauben 16, die zur Erleichterung des Einstellvorganges relativ zur Ausrichtung des Rahmenrohres in Richtung Kettenführung 2 geneigt sind. Mit den Einstellschrauben 16 wird der Bewegungsbereich der Kettenführung 2 definiert.

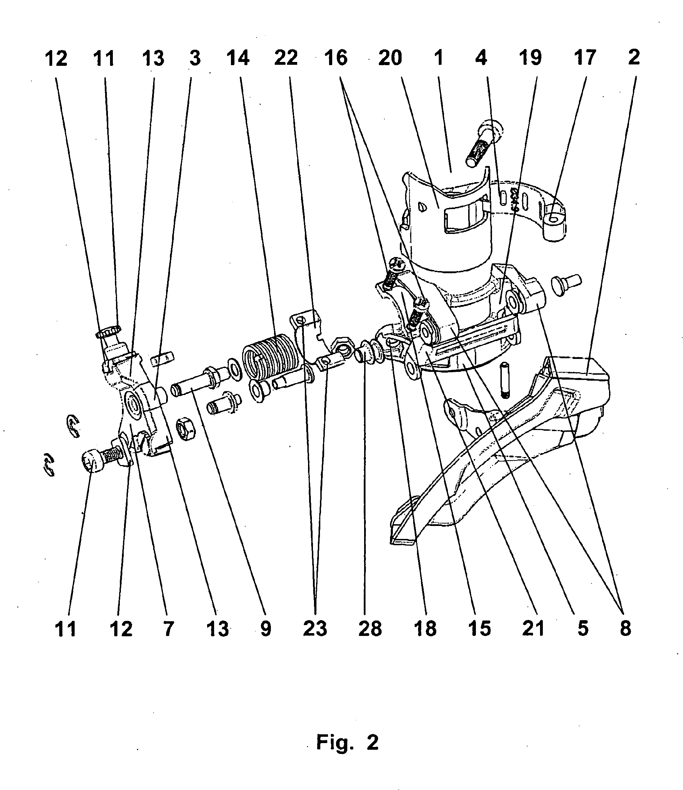

Figur 2 zeigt in einer Explosionsdarstellung die Einzelteile des Kettenumwerfers 1. Das tragende Bauteil ist das Umwerfergehäuse 5 mit dem Scharnier 17 für die Rohrschelle 4 und der Befestigungsbohrung 18 zum Schließen der Rohrschelle 4. Das Umwerfergehäuse 5 ist mit einer Abstützverlängerung 19 ausgestattet, die über den Bereich des Scharniers 17 hinausragt. Hierdurch werden zum einen die Schaltkräfte, die vom Seilzug gegen die Uhrzeigerrichtung am Übertragungselement 3 eingeleitet werden, am Rahmenrohr abgestützt und zum anderen gelingt die Befestigung des Kettenumwerfers 1, bei gleichbleibender, durch das größte Kettenblatt vorgegebener, Funktionshöhe der Kettenführung 2, auch an kurzen Rohren, die bei Fahrrädern mit gefederten Antriebsrädern zum Einsatz kommen. Die Position des Gelenkbolzens 9 an der Abstützverlängerung 19 wird so gewählt, dass sich die erste Anlenkung der Kettenführung 2 am Parallelogrammarm 7, im eingezogenen Zustand der Kettenführung 2, auf der Höhe des Scharniers 17 bzw. der Rohrschelle 4 befindet. Das Adapterelement 20 ermöglicht die Befestigung des Umwerfers 1 an Rahmenrohren mit unterschiedlichen Durchmessern und schont beim Klemmvorgang die Rohroberfläche. Die Außenkontur des Adapterelementes 20 ist an die Innenkontur des Umwerfergehäuses 5 bzw. an die Abstützverlängerung 19 angepasst. Der Werkstoff des Adapterelementes 20 ist so elastisch, dass ein mehrmaliges, zerstörungsfreies Aufschnappen über das Rahmenrohr möglich ist. Im oberen Bereich der Abstützverlängerung 19 befinden sich zwei Gelenkansätze 8 zur Aufnahme des Schwenkelementes 21, das den zweiten Parallelogrammarm bildet. Zur leichtgängigen Lagerung des Schwenkelementes 21 ist zumindest eine Lagerbuchse 28 vorgesehen. Die Federabdeckung 15 ermöglicht mit der Abdeckschale 22 eine Kapselung der Rückstellfeder 14. Die Federabdeckung 15 ist in die Abstützverlängerung 19 integriert und bildet den Sitz der Einstellschrauben 16, die in Richtung Kettenführung 2 geneigt sind. Die Abdeckschale 22 ist aus elastischem Werkstoff und hat Bohrungen 23 zur Aufnahme der Einstellschrauben 16. Um die Einstellschrauben 16 vor unbeabsichtigtem Verdrehen zu schützen, ist der Durchmesser der Bohrungen 23 kleiner als der Gewindeaußendurchmesser der Einstellschrauben 16. Das Übertragungselement 3 schwenkt um den Gelenkbolzen 9, wenn eine Schaltbewegung an einem der Hebelansätze 13 über ein Zugseil eingeleitet wird. Der Seilzug wird mittels einer Klemmschraube 11 und einem Klemmstück 12 am jeweiligen Hebelansatz 13 festgeklemmt. Ein zweiter Hebelansatz 13 ist vorgesehen, um je nach Rahmengeometrie sowohl eine Seilzugrichtung nach oben, als auch eine Seilzugrichtung nach unten zu ermöglichen.

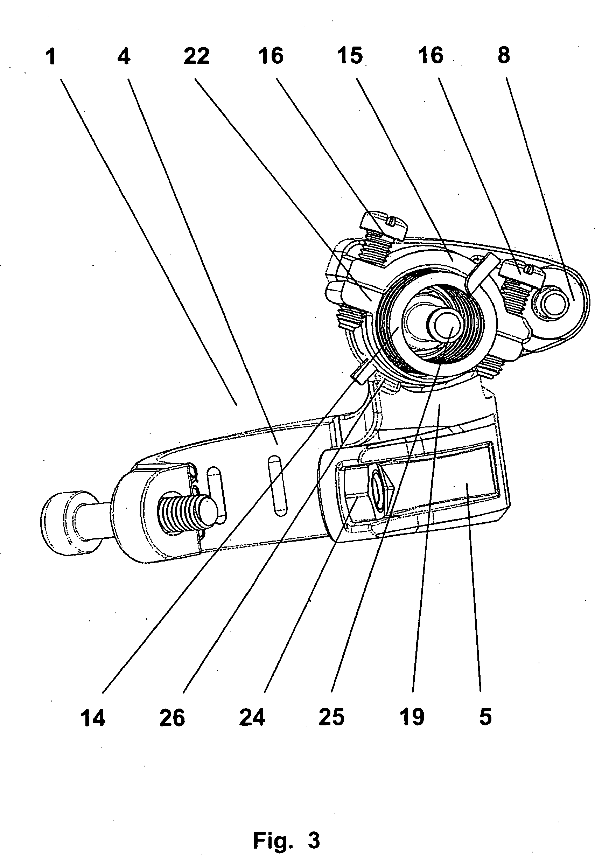

Figur 3 zeigt eine 3 D-Darstellung des Kettenumwerfers 1 ohne Übertragungselement und Kettenführung. Die geöffnete Rohrschelle 4 wird mittels einer Schraube, die bei der Montage durch die Befestigungsbohrung gesteckt wird, und der Befestigungsmutter 24 am Rahmenrohr geschlossen und fixiert. Die Befestigungsmutter 24 wird von einer entsprechenden Kontur am Umwerfergehäuse 5 aufgenommen und gegen Verdrehen gesichert sowie durch eine Materialverformung des Umwerfergehäuses 5 verliersicher festgehalten. Das Umwerfergehäuse 5 ist über den Bereich des Scharniers bzw. der Rohrschelle 4 hinaus mit einer Abstützverlängerung 19 ausgestattet. Im oberen Bereich der Abstützverlängerung 19 befindet sich der Gelenkansatz 8 mit einer Bohrung für die gelenkige Anbindung des Schenkelelementes. Parallel zu dieser Bohrung verläuft die Bohrung bzw. das Gewinde der Gelenkbolzenaufnahme 25 für den Gelenkbolzen, auf dem das Übertragungselement gelagert wird. Um die Gelenkbolzenaufnahme 25 ist die Rückstellfeder 14 angeordnet, die sich über den Federanschlag 26 an der Abstützverlängerung 19 anlehnt. Die Rückstellfeder 14 wird von der Federabdeckung 15 und der Abdeckschale 22 gegen Verschmutzung gekapselt. Die Federabdeckung 15 trägt die beiden Einstellschrauben 16, die relativ zur Rahmenrohrausrichtung in Richtung Kettenführung geneigt sind. Diese Einstellschrauben 16 werden in den entsprechenden Bohrungen in der aus elastischem Werkstoff gefertigten Abdeckschale 22 gegen Verdrehen gesichert. Der Durchmesser der Bohrungen in der Abdeckschale 22 ist kleiner als der Gewindeaußendurchmesser der Einstellschrauben 16, wodurch ein unbeabsichtigtes Verdrehen der Einstellschrauben 16 verhindert wird.

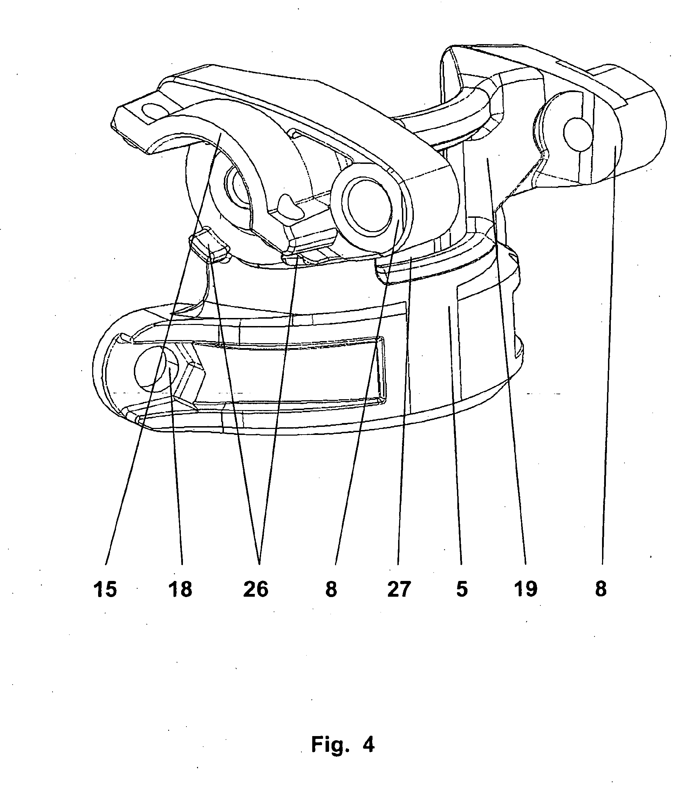

Figur 4 zeigt eine 3 D-Darstellung des Umwerfergehäuses 5 mit der Abstützverlängerung 19 und der Befestigungsbohrung 18. Im oberen Bereich der Abstützverlängerung 19 sind die Gelenkansätze 8 mit den Lagerstellen zur beweglichen Anlenkung des Schwenkelementes angeordnet. Der Bohrungsdurchmesser der Lagerstelle am ersten Gelenkansatz 8 in der Nähe der Federabdeckung 15 ist, zur Aufnahme einer Lagerbuchse größer, als der am anderen Gelenkansatz 8. Unterhalb der Federabdeckung 15 befinden sich zwei Federanschläge 26, die unterschiedliche Vorspannungen der Rückstellfeder ermöglichen. Die relativ zur Rahmenrohrausrichtung geneigte Federabdeckung 15 bildet die Basis für die Einstellschrauben. Die Abstützverlängerung 19 hat zur Gewichtseinsparung im mittleren Bereich einen Materialdurchbruch 27, der sich auch an der gleichen Stelle am Adapterelement befindet.

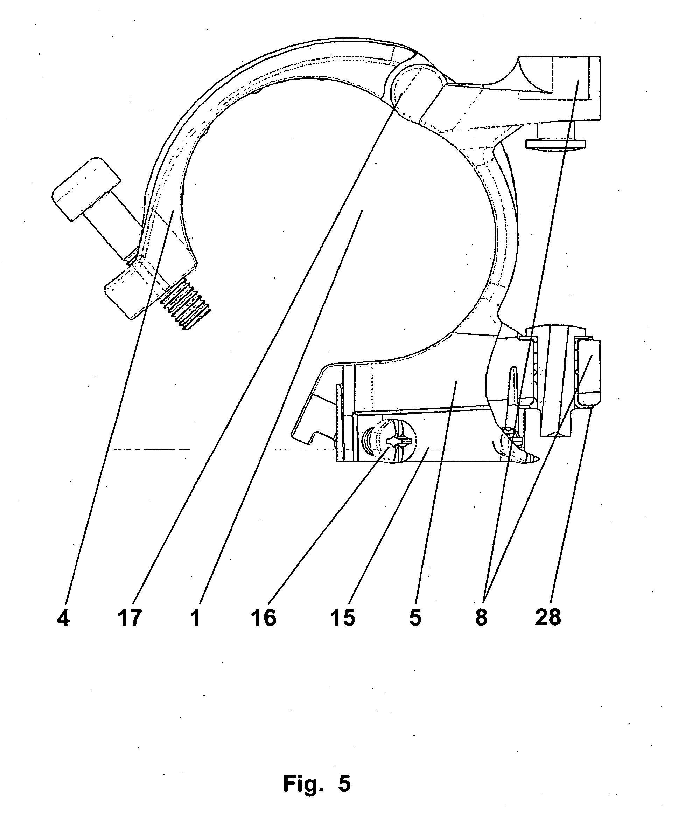

Figur 5 zeigt die Lagerung des Schwenkelementes am Umwerfergehäuse 5 im Schnitt. Das Schwenkelement wird an den beiden Gelenkansätzen 8 jeweils über einen Bolzen angelenkt. Der im Bereich der Federabdeckung 15 befindliche Bolzen ist in einer Lagerbuchse 28 gelagert, da hier die größten, durch die Kettenführung über das Schwenkelement in die Abstützverlängerung einzuleitenden Kräfte auftreten. Die in der Federabdeckung 15 eingeschraubten Einstellschrauben 16 sind relativ zur vom Umwerfergehäuse 5 und der Rohrschelle 4 definierten Aufnahmerichtung des Rahmenrohres geneigt. Das Scharnier 17 erlaubt eine weite Öffnung der Rohrschelle 4 und somit eine leichte Montage des Kettenumwerfers 1 am Rahmenrohr.

### Bezugszeichenliste

- 1: Kettenumwerfer
- 2: Kettenführung
- 3: Übertragungselement
- 4: Rohrschelle
- 5: Umwerfergehäuse
- 6: Anlenkpunkt
- 7: Parallelogrammarm
- 8: Gelenkansatz
- 9: Gelenkbolzen
- 10: Anlenkbolzen
- 11: Klemmschraube
- 12: Klemmstück
- 13: Hebelansatz
- 14: Rückstellfeder
- 15: Federabdeckung
- 16: Einstellschraube
- 17: Scharnier
- 18: Befestigungsbohrung
- 19: Abstützverlängerung
- 20: Adapterelement
- 21: Schwenkelement
- 22: Abdeckschale
- 23: Bohrung
- 24: Befestigungsmutter
- 25: Gelenkbolzenaufnahme
- 26: Federanschlag
- 27: Materialdurchbruch
- 28: Lagerbuchse

## Patentansprüche

1. Kettenumwerfer (1) bestehend im Wesentlichen aus einer Kettenführung (2), einer Parallelogrammmechanik, einem Übertragungselement (3) mit Klemmschraube (11) zur Befestigung eines Zugseiles zum Einleiten der Schaltbewegung, einer Rohrschelle (4), einer Rückstellfeder (14) und einem Umwerfergehäuse (5) mit Anlenkpunkten (6) für zwei Parallelogrammarme (7), von denen ein Parallelogrammarm (7) mit dem Übertragungselement (3) integriert ist und der zweite Parallelogrammarm (7) von einem Schwenkelement (21) gebildet ist, und einem am Umwerfergehäuse (5) befindlichen Scharnier (17) zur gelenkigen Anbindung der Rohrschelle (4);
wobei das Umwerfergehäuse (5) mit einer in Axialrichtung der zylinderförmigen Innenkontur des Umwerfergehäuses (5) über den Bereich des Scharniers (17) hinausragenden Abstützverlängerung (19) ausgestattet ist und an der Abstützverlängerung (19) mindestens ein Gelenkansatz (8) zur Aufnahme eines Schwenkelementes (21) und ein parallel zu einer durch eine Aufnahmebohrung des mindestens einen Gelenkansatz gebildeten Drehachse verlaufender Gelenkbolzen (9) zur Aufnahme des Übertragungselementes (3) angeordnet sind **dadurch gekennzeichnet, dass**
die Rückstellfeder (14) am Gelenkbolzen (9) zwischen dem Übertragungselement (3) und dem Umwerfergehäuse (5), angeordnet ist;
wobei die Position des Gelenkbolzens (9) an der Abstützverlängerung (19) so gewählt ist, dass sich die Anlenkung (10) der Kettenführung (2) am im Übertragungselement (3) integrierten Parallelogrammarm (7), im eingezogenen Zustand der Kettenführung (2) auf der Höhe des Scharniers (17) bzw. der Rohrschelle (4) befindet.

2. Kettenumwerfer (1) nach Anspruch 1,
**dadurch gekennzeichnet,**
**dass** in die Abstützverlängerung (19) eine Federabdeckung (15) zum Schutz der um den Gelenkbolzen (8) angeordneten Rückstellfeder (14) integriert ist.

3. Kettenumwerfer (1) nach Anspruch 2,
**dadurch gekennzeichnet,**
**dass** an der Federabdeckung (15) der Sitz für mindestens eine Einstellschraube (16) vorhanden ist.

4. Kettenumwerfer (1) nach Anspruch 3,
**dadurch gekennzeichnet,**
**dass** der Sitz der Einstellschraube (16) mit einem Gewinde ausgestattet ist und die Einstellschraube (16) zur Erleichterung des Einstellvorganges relativ zur Axialrichtung der zylinderförmigen Innenkontur des Umwerfergehäuses (5) in Richtung Kettenführung (2) geneigt ist.

5. Kettenumwerfer (1) nach Anspruch 2,
**dadurch gekennzeichnet,**
**dass** die Federabdeckung (15) die Rückstellfeder (14) nur teilweise umschließt und eine Abdeckschale (22) den noch offenen Bereich abdeckt.

6. Kettenumwerfer (1) nach Anspruch 2,
**dadurch gekennzeichnet,**
**dass** zum Einstellen unterschiedlicher Federvorspannungen der Rückstellfeder (14) mehrere Federanschläge (26) an der Abstützverlängerung (19) angeordnet sind.

7. Kettenumwerfer (1) nach den Ansprüchen 5 und 6,
**dadurch gekennzeichnet,**
**dass** sich die Abdeckschale (22) an mindestens einem Federanschlag (26) an der Abstützverlängerung (19) bzw. am Umwerfergehäuse (5) abstützt und jeweils eine Bohrung pro Einstellschraube (16) aufweist.

8. Kettenumwerfer (1) nach Anspruch 7,
**dadurch gekennzeichnet,**
**dass** die Abdeckschale (22) aus elastischem Werkstoff besteht und die Bohrung zur Aufnahme der Einstellschraube (16) enger ist als dessen Gewindeaußendurchmesser, wodurch eine Verdrehsicherung gebildet wird.

9. Kettenumwerfer (1) nach Anspruch 1,
**dadurch gekennzeichnet,**
**dass** die Abstützverlängerung (19) im mittleren Bereich mit einer Materialaussparung bzw. einem Materialdurchbruch (27) ausgestattet ist.

10. Kettenumwerfer (1) nach Anspruch 1,
**dadurch gekennzeichnet,**
**dass** das Übertragungselement (3) am Gelenkbolzen (9) schwenkbar gelagert ist und mit mindestens einem Hebelansatz (13) zur Befestigung eines Seilzuges sowie mit einem Parallelogrammarm (7) ausgestattet ist.

11. Kettenumwerfer (1) nach Anspruch 1,
**dadurch gekennzeichnet,**
**dass** das Übertragungselement (3) am Gelenkbolzen (9) schwenkbar gelagert ist und mit zwei Hebelansätzen (13) zur wahlweisen Befestigung eines nach unten oder nach oben ziehenden Seilzuges sowie mit einem Parallelogrammarm (7) ausgestattet ist.

12. Kettenumwerfer (1) nach Anspruch 10,
**dadurch gekennzeichnet,**
**dass** am Parallelogrammarm (7) ein Gelenk zur ersten Anlenkung der Kettenführung (2) vorgesehen ist, wobei dieses Gelenk und damit auch die Anbindung der Kettenführung (2) unterhalb des Gelenkbolzens (9) und im eingezogenen Zustand auf der Höhe des Scharniers (17) bzw. der Rohrschelle (4) angeordnet sind.

13. Kettenumwerfer (1) nach Anspruch 10,
**dadurch gekennzeichnet,**
**dass** die Einstellschrauben (16) den Schwenkbereich des Übertragungselementes (3) definieren und das Übertragungselement (3) von der Rückstellfeder (14) im Uhrzeigersinn vorgespannt wird.

14. Kettenumwerfer (1) nach Anspruch 1,
**dadurch gekennzeichnet,**
**dass** mindestens ein Gelenk zur Aufnahme des Schwenkelementes (21) an der Abstützverlängerung (19) mit einer Lagerbuchse (28) ausgestattet ist.

15. Anordnung bestehend aus mindestens einem elastische Adapterelement (20) und einem Kettenwerfer gemäß Anspruch 1, wobei das Adapterelement (20) über ein Rahmenrohr geschnappt werden kann und dessen Außenkontur an die entsprechende Innenkontur des Kettenwerfers (1) angepaßt ist.

## Claims

1. Dérailleur (1) consisting essentially of a chain guide (2), a parallelogram mechanism, a transmission element (3) with a clamping screw (11) for the fastening of a tension cable for initiating the gear-changing movement, a tube clip (4), a resetting spring (14) and a dérailleur housing (5) having coupling points (6) for two parallelogram arms (7), of which one parallelogram arm (7) is integrated with the transmission element (3) and the second parallelogram arm (7) is formed by a pivot element (21), and a hinge (17) which is located on the dérailleur housing (5) and is intended for the articulated connection of the tube clip (4);
wherein the dérailleur housing (5) is equipped with a support extension (19) which protrudes over the region of the hinge (17) in the axial direction of the cylindrical inner contour of the dérailleur housing (5), and at least one joint attachment (8) for receiving a pivot element (21), and a joint bolt (9) which runs parallel to an axis of rotation formed by a receiving bore in the at least one joint attachment and which is intended to receive the transmission element (3), are arranged on the support extension (19),
**characterized in that** the resetting spring (14) is arranged on the joint bolt (9) between the transmission element (3) and the dérailleur housing (5);
the position of the joint bolt (9) on the support extension (19) being selected in such a manner that the articulation (10) of the chain guide (2) on the parallelogram arm (7), which is integrated in the transmission element (3), is located level with the hinge (17) or the tube clip (4) in the retracted state of the chain guide (2).

2. Dérailleur (1) according to Claim 1, **characterized in that** a spring cover (15) for protecting the resetting spring (14) arranged around the joint bolt (8) is integrated into the support extension (19).

3. Dérailleur (1) according to Claim 2, **characterized in that** the seat for at least one adjusting screw (16) is present on the spring cover (15).

4. Dérailleur (1) according to Claim 3, **characterized in that** the seat of the adjusting screw (16) is provided with a thread, and the adjusting screw (16) is inclined in the direction of the chain guide (2) relative to the axial direction of the cylindrical inner contour of the dérailleur housing (5) to facilitate the adjustment operation.

5. Dérailleur (1) according to Claim 2, **characterized in that** the spring cover (15) only partially surrounds the resetting spring (14) and a covering shell (22) covers the region which is still open.

6. Dérailleur (1) according to Claim 2, **characterized in that** a plurality of spring stops (26) is arranged on the support extension (19) in order to set different spring pretensions of the resetting spring (14).

7. Dérailleur (1) according to Claims 5 and 6, **characterized in that** the covering shell (22) is supported on at least one spring stop (26) on the support extension (19) or on the dérailleur housing (5) and in each case has one bore per adjusting screw (16).

8. Dérailleur (1) according to Claim 7, **characterized in that** the covering shell (22) is composed of an elastic material, and the bore for receiving the adjusting screw (16) is narrower than the outside diameter of the thread thereof, thus resulting in the formation of a means for securing against rotation.

9. Dérailleur (1) according to Claim 1, **characterized in that** the support extension (19) is provided with a material cutout or a material aperture (27) in the central region.

10. Dérailleur (1) according to Claim 1, **characterized in that** the transmission element (3) is mounted pivotably on the joint bolt (9) and is provided with at least one lever attachment (13) for the fastening of a cable pull, and with a parallelogram arm (7).

11. Dérailleur (1) according to Claim 1, **characterized in that** the transmission element (3) is mounted pivotably on the joint bolt (9) and is provided with two lever attachments (13) for the optional fastening of a downwardly or upwardly pulling cable pull, and with a parallelogram arm (7).

12. Dérailleur (1) according to Claim 10, **characterized in that** a joint for the first articulation of the chain guide (2) is provided on the parallelogram arm (7), said joint and therefore also the connection of the chain guide (2) being arranged below the joint bolt (9) and level with the hinge (17) or the tube clip (4) in the retracted state.

13. Dérailleur (1) according to Claim 10, **characterized in that** the adjusting screws (16) define the pivoting range of the transmission element (3), and the transmission element (3) is pretensioned in the clockwise direction by the resetting spring (14).

14. Dérailleur (1) according to Claim 1, **characterized in that** at least one joint for receiving the pivot element (21) on the support extension (19) is equipped with a bearing bush (28).

15. Arrangement consisting of at least one elastic adaptor element (20) and a dérailleur according to Claim 1, wherein the adaptor element (20) can be snapped over a frame tube and the outer contour of said adaptor element is matched to the corresponding inner contour of the dérailleur (1).

## Revendications

1. Dérailleur (1) constitué essentiellement d'un guide de chaîne (2), d'un mécanisme à parallélogramme, d'un élément de transfert (3) avec une vis de serrage (11) pour fixer un câble de traction pour amorcer le mouvement de changement de vitesse, un collier de serrage (4), un ressort de rappel (14) et un boîtier de dérailleur (5) avec des points d'articulation (6) pour deux bras de parallélogramme (7), dont un bras de parallélogramme (7) est intégré à l'élément de transfert (3) et le deuxième bras de parallélogramme (7) est formé par un élément pivotant (21), et une charnière (17) située sur le boîtier de dérailleur (5) pour la connexion articulée du collier de serrage (4);
le boîtier de dérailleur (5) étant pourvu d'un prolongement de support (19) saillant dans la direction axiale du contour intérieur de forme cylindrique du boîtier de dérailleur (5) au-delà de la région de la charnière (17), et sur le prolongement de support (19) étant disposés au moins une pièce d'articulation (8) pour recevoir un élément pivotant (21) et un boulon d'articulation (9) s'étendant parallèlement à un axe de rotation formé par un alésage de réception de l'au moins une pièce d'articulation, pour recevoir l'élément de transfert (3),
**caractérisé en ce que**
le ressort de rappel (14) est disposé sur le boulon d'articulation (9) entre l'élément de transfert (3) et le boîtier de dérailleur (5) ;
la position du boulon d'articulation (9) sur le prolongement de support (19) étant choisie de telle sorte que l'articulation (10) du guide de chaîne (2) sur le bras de parallélogramme (7) intégré dans l'élément de transfert (3), dans l'état rentré du guide de chaîne (2), se trouve à la hauteur de la charnière (17) ou du collier de serrage (4).

2. Dérailleur (1) selon la revendication 1,
**caractérisé en ce que**
dans le prolongement de support (19) est intégré un recouvrement de ressort (15) pour protéger le ressort de rappel (14) disposé autour du boulon d'articulation (9).

3. Dérailleur (1) selon la revendication 2,
**caractérisé en ce que**
le siège d'au moins une vis de réglage (16) est prévu sur le recouvrement de ressort (15).

4. Dérailleur (1) selon la revendication 3,
**caractérisé en ce que**
le siège de la vis de réglage (16) est muni d'un filetage et la vis de réglage (16) est inclinée dans la direction du guide de chaîne (2) pour faciliter l'opération de réglage par rapport à la direction axiale du contour intérieur de forme cylindrique du boîtier de dérailleur (5).

5. Dérailleur (1) selon la revendication 2,
**caractérisé en ce que**
le recouvrement de ressort (15) n'entoure que partiellement le ressort de rappel (14) et une coque de recouvrement (22) recouvre la région encore ouverte.

6. Dérailleur (1) selon la revendication 2,
**caractérisé en ce que**
pour le réglage de différentes tensions du ressort de rappel (14), on prévoit plusieurs butées de ressort (26) sur le prolongement de support (19).

7. Dérailleur (1) selon les revendications 5 et 6,
**caractérisé en ce que**
la coque de recouvrement (22) s'appuie sur au moins une butée de ressort (26) sur le prolongement de support (19) ou sur le boîtier de dérailleur (5), et présente à chaque fois un alésage par vis de réglage (16).

8. Dérailleur (1) selon la revendication 7,
**caractérisé en ce que**
la coque de recouvrement (22) se compose d'un matériau élastique et l'alésage pour recevoir la vis de réglage (16) est plus étroit que son diamètre extérieur de filetage, de sorte que l'on obtient une fixation en rotation.

9. Dérailleur (1) selon la revendication 1,
**caractérisé en ce que**
le prolongement de support (19) est pourvu dans la région centrale d'un évidement de matériau ou d'un perçage (27) dans le matériau.

10. Dérailleur (1) selon la revendication 1,
**caractérisé en ce que**
l'élément de transfert (3) est monté de manière pivotante sur le boulon d'articulation (9) et est muni d'au moins une pièce de levier (13) pour fixer un câble de traction, ainsi que d'un bras de parallélogramme (7).

11. Dérailleur (1) selon la revendication 1,
**caractérisé en ce que**
l'élément de transfert (3) est monté de manière pivotante sur le boulon d'articulation (9) et est muni de deux pièces de levier (13) pour la fixation sélective d'un câble de traction tirant vers le bas ou vers le haut, ainsi que d'un bras de parallélogramme (7).

12. Dérailleur (1) selon la revendication 10,
**caractérisé en ce**
**qu'**une articulation pour l'articulation du guide de chaîne (2) est prévue sur le bras de parallélogramme (7), et cette articulation, et donc aussi la connexion du guide de chaîne (2) sont disposées sous le boulon d'articulation (9) et dans l'état rentré, à la hauteur de la charnière (17) ou du collier de serrage (4).

13. Dérailleur (1) selon la revendication 10,
**caractérisé en ce que**
les vis de réglage (16) définissent la région de pivotement de l'élément de transfert (3) et l'élément de transfert (3) est précontraint par le ressort de rappel (14) dans le sens des aiguilles d'une montre.

14. Dérailleur (1) selon la revendication 1,
**caractérisé en ce**
**qu'**au moins une articulation pour recevoir l'élément pivotant (21) sur le prolongement de support (19) est pourvue d'une douille de palier (28).

15. Agencement constitué d'au moins un élément d'adaptateur élastique (20) et d'un dérailleur selon la revendication 1, l'élément d'adaptateur (20) pouvant être encliqueté sur un tube de cadre et son contour extérieur étant adapté au contour intérieur correspondant du dérailleur (1).
